**Europäisches Patentamt**

**European Patent Office**

**Office européen des brevets**

(19)

(11) **EP 0 984 413 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(51) Int Cl.:
*G06T 7/20* (2006.01)  *G06T 7/40* (2006.01)
*G08B 13/194* (2006.01)  *G08B 17/12* (2006.01)

(21) Anmeldenummer: **99250238.5**

(22) Anmeldetag: **16.07.1999**

(54) **Verfahren und Vorrichtung zur automatischen Waldbranderkennung**

Method and system for automatic forest fire recognition

Méthode et système de reconnaissance automatique de feux de forêts

(84) Benannte Vertragsstaaten:
**AT BE CH CY DE DK ES FI FR GB GR IE IT LI LU MC NL PT SE**
Benannte Erstreckungsstaaten:
**LT LV RO SI**

(30) Priorität: **01.09.1998 DE 19840873**

(43) Veröffentlichungstag der Anmeldung:
**08.03.2000 Patentblatt 2000/10**

(60) Teilanmeldung:
**05090259.2 / 1 628 260**

(73) Patentinhaber: **Deutsches Zentrum für Luft- und Raumfahrt e.V.**
**53175 Bonn (DE)**

(72) Erfinder:
• **Behnke, Thomas**
 **15781 Zeesen (DE)**
• **Hetzheim, Hartwig, Dr.**
 **12439 Berlin (DE)**
• **Knollenberg, Jörg, Dr.**
 **12053 Berlin (DE)**
• **Kührt, Ekkehard, Dr.**
 **15732 Schulzendorf (DE)**
• **Jahn, Herbert, Prof.**
 **12487 Berlin (DE)**

(74) Vertreter: **Effert, Bressel und Kollegen**
 **Radickestrasse 48**
 **12489 Berlin (DE)**

(56) Entgegenhaltungen:
FR-A- 2 674 974    FR-A- 2 696 939
US-A- 4 937 878    US-A- 5 237 308
US-A- 5 583 947    US-A- 5 734 335

• FOO S Y: "A machine vision approach to detect and categorize fires in aircraft dry bays and engine compartments" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA, IEEE, US, 8. Oktober 1995 (1995-10-08), Seiten 1557-1564, XP010193188 ISBN: 0-7803-3008-0

EP 0 984 413 B1

**Beschreibung**

Die Erfindung betrifft ein Verfahren und eine Vorrichtung zur automatischen Waldbranderkennung.

Die Gefahr von Bränden in Wald und Flur wächst infolge klimatischer Veränderungen und menschlicher Eingriffe und Tätigkeiten ständig. Derartige Brände stellen meist eine Gefährdung von Menschenleben dar und verursachen große volkswirtschaftliche und ökologische Schäden. Zur effektiven Bekämpfung und Eindämmung von Waldbränden ist ein frühzeitiges Erkennen notwendig. Hierfür gibt es je nach Art und Größe der zu überwachenden Region und des Gefährdungspotentials verschiedene Verfahren. Dabei kommen beispielsweise Flugzeuge zum Einsatz oder aber menschliche Beobachtungsposten auf Türmen. Vor allem bei einer langfristigen turmgebundenen Überwachung ergeben sich Erkennungsfehler durch Übermüdung, Unaufmerksamkeit und ähnliche Faktoren.

Daher wurden bereits automatisch arbeitende Vorrichtungen zur Waldbranderkennung vorgeschlagen, wo die Umgebung mittels eines Kamerasystems im sichtbaren und/oder im IR-Bereich untersucht wird. Besonders in dichten Wäldern spielt die Raucherkennung im sichtbaren Spektralbereich eine entscheidende Rolle, da offene Flammen, auf die IR-Sensoren ansprechen, den Brand zu spät melden.

Eine solche Vorrichtung ist beispielsweise aus der US-5,237,308 bekannt, wo anhand einer Differenz-Bild-Analyse auf das Vorhandensein von Rauchwolken zurückgeschlossen wird. Dabei wird ausgenutzt, daß Rauchwolken mit der Zeit Größe und Form verändern. Zur Untersuchung eines Gebietes wird die Kamera fest installiert und nimmt eine bestimmte Szene auf. In definierten Zeiträumen wird die Szene erneut aufgenommen. Durch Bildung der Differenz zwischen der ursprünglichen Szene und den erneut aufgenommenen Szenen ergibt sich im Idealfall eine Folge von Schwarz-Weiß-Bildern, in der bewegte Objekte schwarz hervortreten, wohingegen der konstante Hintergrund sich gerade aufhebt. Anhand der Änderung von Form und Größe des bewegten Objektes wird dann auf das Vorhandensein einer Rauchwolke geschlossen. Allerdings müssen Änderungen aufgrund anderer Ursachen zuverlässig unterdrückt werden. Solche Änderungen können beispielsweise durch Bewegungen von Personen, Tieren oder Fahrzeugen hervorgerufen werden. Des weiteren können an sich ortsfeste Objekte wie Bäume durch den Wind bewegt werden. Eine weitere Fehlerursache stellen sich ändernde Beleuchtung- und Reflexionsverhältnisse dar. Zur Unterdrückung der Fehler aufgrund von Bewegungen wird ausgenutzt, daß sich nur die Koordinaten des Objektes, nicht aber dessen Form und Größe ändern. Änderungen im Reflexionsverhalten oder in den Beleuchtungsverhältnissen werden durch Reduzierung der Zeitabstände unterdrückt, da innerhalb kurzer Zeiträume diese Änderungen sehr unwahrscheinlich sind. Eine Rauchwolke wird im wesentlichen durch drei Parameter bestimmt, nämlich die Adresskoordinaten, Form und Größe. Bei einer Rauchwolke kommt es zu einer Überlappung der Adresskoordinaten und Form und Größe des bewegten Objektes verändern sich. Das bekannte Verfahren weist jedoch einige Nachteile auf. So wird bei dem Verfahren davon ausgegangen, daß die Kamera ortsfest und lagestabil angeordnet ist. Um jedoch eine ausreichende Sicht über das zu beobachtende Gebiet zu haben, muß die Kamera auf einer erhöhten Plattform oder einem Turm angeordnet werden. Derartige Aufbauten sind jedoch aufgrund der Windkräfte unvermeidlichen Schwankungen unterworfen. Dies führt wiederum dazu, daß die unterschiedlichen Aufnahmen der Szene nicht einfach voneinander abgezogen werden können, da sich durch die Schwankungen auch jeweils der an sich konstante Hintergrund verändert. Des weiteren erlaubt das bekannte Verfahren keine Rundumüberwachung eines Gebietes, da einerseits eine Vielzahl von Aufnahmen benötigt werden, um zuverlässig die Rauchwolke aus den drei Parametern Größe, Form und Ortsveränderung zu bestimmen, denn es muß stets ein Referenzbild ohne Rauch bzw. bewegte Objekte vorhanden sein. Zum anderen kann zur Vermeidung von Fehlalarmen die Schwelle für einen Alarm sehr hoch gesetzt werden, da prinzipiell eine Folge von n Bildern zur Verfügung steht, welche bei ausreichend großem n die Gefahr eines Übersehens einer Rauchwolke aufgrund der großen Schwelle minimiert. Dies ist jedoch bei einer Rundumüberwachung, bei der die Kamera rotieren muß, nicht mehr gegeben.

Aus der FR 2 696 939 ist ein Verfahren und eine Vorrichtung zur automatischen Waldbranderkennung bekannt, mittels auf einer Plattform drehbar angeordneten optischen Aufnahmeeinrichtung, einer elektronischen Auswerteeinheit und einem Sender oder lokalem Alarmgeber, wobei ein aktuelles Bild aufgenommen und ein binäres Clusterbild berechnet wird. Es werden Wahrscheinlichkeiten zur Bewertung der gefundenen Cluster aufgrund charakteristischer Merkmale gebildet, wobei Cluster unterhalb einer Wahrscheinlichkeitsschwelle eliminiert werden und ein Alarm ausgelöst wird, falls die Rauchwahrscheinlichkeit für mindestens ein Cluster eine vorgegebene Schwelle überschreitet.

Aus der US-5,734,335 ist eine Vorrichtung zur automatischen Waldbranderkennung bekannt, umfassend eine Kamera, die um 360° horizontal verstellbar gelagert ist und mit einer Auswerteeinheit verbunden ist, wobei der Auswerteeinheit ein Sender zur Kommunikation mit einer Zentrale zugeordnet ist.

Der Erfindung liegt daher das technische Problem zugrunde, ein Verfahren und eine Vorrichtung zur automatischen Waldbranderkennung zu schaffen, mittels derer eine Rundumüberwachung möglich ist, jedoch Fehlalarme weitgehend vermieden werden.

Die Lösung des technischen Problems ergibt sich durch die Merkmale der Patentansprüche 1, 4, und 8. Weitere vorteilhafte Ausgestaltungen der Erfindung ergeben sich aus den Unteransprüchen.

Den Verfahren in 1 und 4 ist gemeinsam, dass in jeder Kameraposition mindestens ein Bild aufgenommen und bzgl. seines Grauwertbereiches normiert wird. Außerdem wird der Horizont bestimmt. Diese verfahren nutzen die Dynamik des Rauches, verursacht durch turbulente Konvektion der heißen Gase und Wind, zu seiner Erkennung aus. Für diese Verfahren werden daher zusätzlich Referenzbilder benötigt. Hierzu können entweder Bilder der gleichen Position eines vorangegangen Überwachungszyklus oder eine zusätzliche Aufnahme in der aktuellen Position benutzt werden. Die Bilder werden dann durch Matching-Prozeduren in bestmögliche Deckung gebracht. Dadurch werden sowohl Turmschwankungen als auch unvermeidbare Richtungsabweichungen aufgrund der begrenzten Positioniergenauigkeit des rotierenden Kamerasystems ausgeglichen.

Im ersten Verfahren werden mittels nichtlinearer Filterungen im Referenzbild kleinskalige Bewegungen in der Szene, z.B. Baumschwankungen verursacht durch Wind, durch eine gezielte Bildverschmierung unterdrückt. Anschließend werden Differenzbilder aus Grauwerten oder/und Strukturmerkmalen zwischen Referenzbild und aktuellem Bild berechnet, und diese mittels zur Standardabweichung proportionalen Schwellen binarisiert. Auf die Binärbilder werden Clusteralgorithmen angewendet, um mögliche Rauchwolken zu identifizieren. Die gefundenen Cluster werden dann nach verschiedenen Kriterien wie beispielsweise Größe, Form und Strukturmerkmale auf die Wahrscheinlichkeit von Rauch untersucht und bewertet. Das Verfahren eignet sich besonders für die Raucherkennung im Vordergrund des Bildes, da die hier störenden Schwankungen in der Szene effektiv unterdrückt werden.

In dem alternativen Verfahren gemäß Anspruch 4 wird ein normiertes Kontrast-Differenzbild erzeugt. Mittels einer Bandpassfilterung werden für Rauch nicht relevante räumliche Frequenzen eliminiert. Das gefilterte Differenzbild wird mit als Funktion der Streuung adaptiv berechneten Schwellwerten binarisiert. Dieses binarisierte Bild wird dann nach Clustern untersucht. Das Verfahren arbeitet wegen seiner hohen Empfindlichkeit arbeitet besonders effektiv bei der Erkennung von Rauchwolken in großen Distanzen.

Im Gegensatz zu den vorangegangenen Verfahren, bei denen die Dynamik des Rauches zur Erkennung genutzt wird, wertet in einer bevorzugten Ausführungsform ein zusätzliches Verfahren das aktuelle Bild direkt mittels Texturmerkmalen aus. Es kann dadurch andere dynamische Phänomenen, wie bewegte Fahrzeuge, Tiere und Wolken, als Quelle von Fehlalarmen ausschließen.

Die parallele Anwendung der Verfahren nutzt damit - wie auch ein menschlicher Beobachter- die Hauptmerkmale von Rauchwolken, Dynamik und Struktur, optimal aus und erhöht somit die Detektionssicherheit. Die mit den verschiedenen Verfahren identifizierten Cluster werden dazu überlagert und die berechneten Einzelwahrscheinlichkeiten als bedingte Wahrscheinlichkeiten zu einer Gesamtwahrscheinlichkeit zusammengefasst. Diese ist beispielsweise klein, wenn sich Cluster in einem gewissen Bildbereich nicht überlappen. Überschreitet die Gesamtwahrscheinlichkeit für ein Cluster eine vorgegebene Schwelle, wird eine Alarmmeldung mit Richtungs-, Entfernungs- und Größeninformationen ausgelöst. Ist die Untersuchung für ein aktuelles Bild abgeschlossen, wird bei unsicherer Rauchdetektion ein weiteres Bild in derselben Kameraposition aufgenommen und verarbeitet oder die Kamera wird in die nächste Position geschwenkt.

Die Erfindung wird nachfolgend anhand eines bevorzugten Ausführungsbeispieles' näher erläutert. Die Fig. zeigen:

Fig. 1     eine erste Szene ohne Rauch als Referenzbild,

Fig. 2     das Referenzbild gemäß Fig.1 nach einer nichtlinearen Filterung,

Fig.3     eine Aufnahme eines aktuellen Bildes in der Szene,

Fig.4     ein binarisiertes Bild der aktuellen Aufnahme mit allen Clustern,

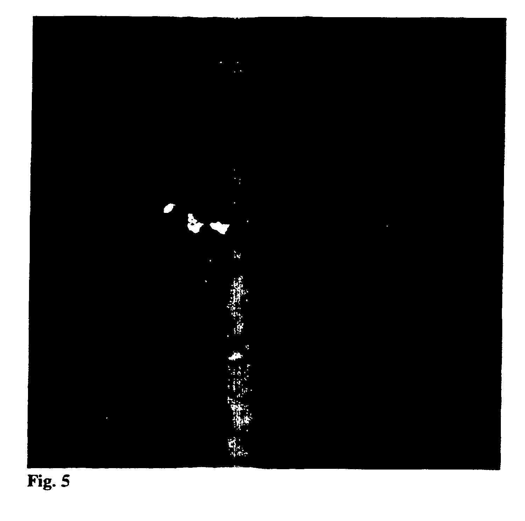

Fig.5     ein binarisiertes Bild gemäß Fig.4 nach Eliminierung der unwahrscheinlichen Cluster,

Fig.6     ein normiertes Kontrastbild der Bilder gemäß Fig.1 und Fig.3,

Fig.7     das normierte Kontrastbild gemäß Fig.6 nach einer Bandpaßfilterung,

Fig.8     das binarisierte, normierte Kontrastbild nach Fig.7,

Fig.9     das binarisierte Bild gemäß Fig.8 nach Eliminierung der Falschdetektionen,

Fig.10     das aktuelle Bild gemäß Fig.3 nach der Markierung von Himmel und Gebäuden mittels einer Strukturanalyse,

Fig.11     das aktuelle Bild nach der Markierung des vorderen Waldabschnitts,

Fig.12     Erkennung des Walces am Horizont und der vorgelagerten Wiese durch Strukturmerkmale,

Fig.13     Strukturunterschiede des Rauches,

Fig.14     Hervorhebung des Rauches durch Maskierung der als unwesentlich eingestuften Bereiche und

Fig.15     binarisiertes Bild des zusammengefaßten Strukturbildes.

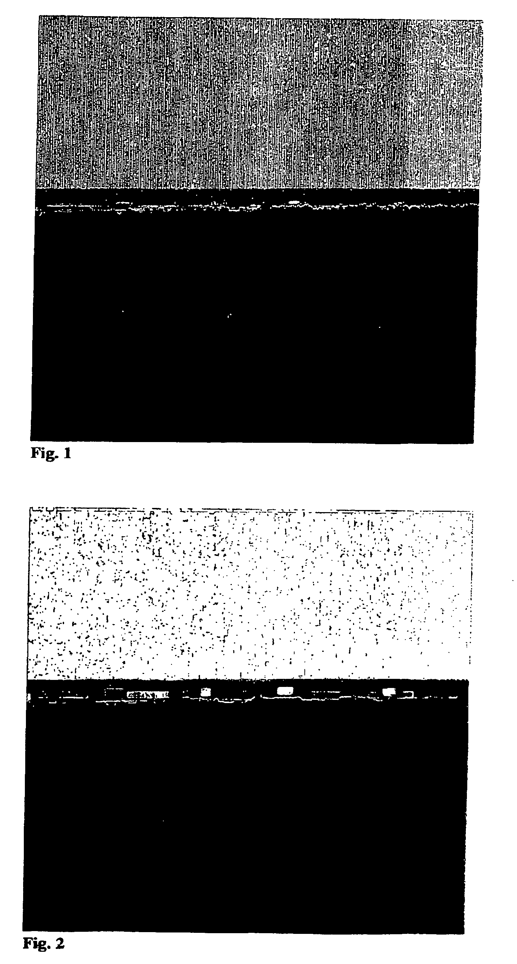

In der Fig.1 ist ein Referenzbild einer zu untersuchenden Szene ohne Rauch dargestellt. Dieses Referenzbild kann vorab aufgenommen werden und für die jeweilige Untersuchung wieder ausgelesen werden, oder aber das Referenzbild wird kurz vor der eigentlichen Aufnahme aufgenommen. Auf dem Referenzbild erkennt man ein im Vordergrund liegendes Waldgebiet und den Horizont. Dieses Referenzbild wird zunächst auf Standardwerte wie beispielsweise mittlere Helligkeit und Standardabweichungen normiert. Anschließend wird der Horizont beispielsweise durch eine partielle Ableitung in Y-Richtung bestimmt und markiert. Zur Unterdrückung von möglichen kleinskaligen Bewegungen im Bild, beispielsweise aufgrund von Schwankungen der Bäume durch den Wind, werden die Referenzbilder einer Bildverschmierung unterzogen. Dies erfolgt durch eine nichtlineare Filterung in einem Bildfenster, dessen Größe so gewählt wird, daß die möglichen Bewegungen in ihm enthalten sind. Im Ausführungsbeispiel werden das lokale Maximum und das lokale Minimum im Bildfenster verwendet. Das Ergebnis für das lokale Maximum des Referenzbildes aus Fig.1 ist in Fig.2 dargestellt.

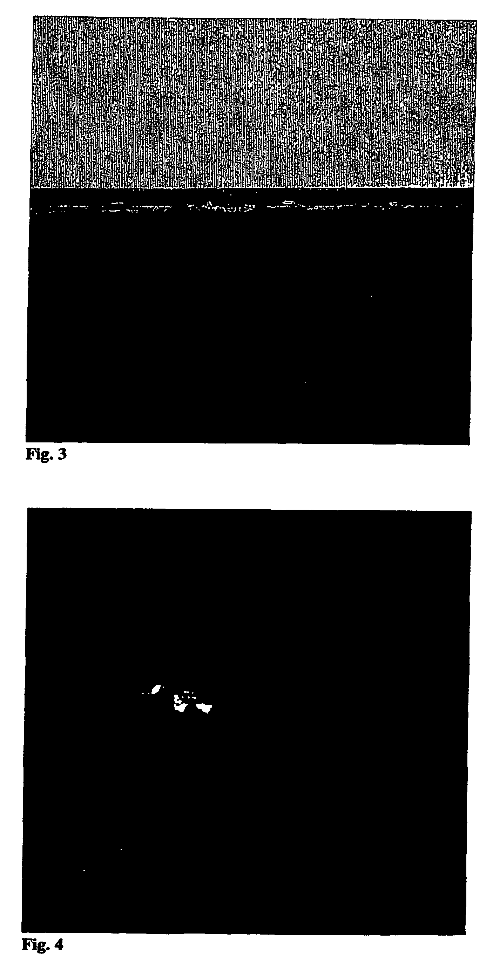

In der Fig.3 ist ein aktuell aufgenommenes Bild der Szene dargestellt, in der sich, für das menschliche Auge kaum wahrnehmbar, eine Rauchwolke befindet. Bevor das aktuelle Bild gemäß Fig.3 mit dem Referenzbild verglichen werden kann, wird das aktuelle Bild ebenfalls auf Standardwerte normiert und mit dem Referenzbild gematcht. Danach werden Differenzbilder aus dem aktuellen Bild und den gefilterten Referenzbildern berechnet. Mittels Schwellwerten wird das Differenzbild binarisiert, d.h. eine logische Eins bei Überschreitung der Schwelle und eine logische Null bei Unterschreitung der Schwelle erzeugt, so daß sich als Ergebnis ein Schwarz-Weiß-Bild ergibt, das in Fig.4 dargestellt ist.

Anschließend wird das erzeugte binarisierte Bild mittels eines Clustersuchalgorithmus untersucht. Die Pixel des Binärbildes erhalten ein Label, aus dem sich die Zugehörigkeit zu einem bestimmten Cluster ergibt. Die aufgefundenen Cluster werden nun auf verschiedene Merkmale wie Größe, Form, Struktur, Stärke der Abweichung vom Referenzbild und Position des Clusters untersucht. Die einzelnen Merkmale werden dann zusammen gewichtet und den Clustern eine Rauchwahrscheinlichkeit zugeordnet.

In einem alternativen Verfahren erfolgt die Erkennung von Rauchwolken ebenfalls anhand der dynamischen Änderungen eines Differenzbildes, was anhand des gleichen Referenzbildes gemäß Fig.1 und des gleichen aktuellen Bildes gemäß Fig.3 erläutert wird. Dabei wird wie in dem vorangegangenen Verfahren zunächst das Referenzbild auf Mittelwert und Standardabweichung normiert. Das aufgenommene aktuelle Bild wird dann auf das Referenzbild gematched, um beispielsweise Winkelungenauigkeiten der Kamera und Turmschwankungen auszugleichen. Das verschobene aktuelle Bild wird dann wie das Referenzbild auf Mittelwert und Standardabweichung normiert. Aus den beiden normierten Bildern wird anschließend ein normiertes Kontrast-Differenzbild berechnet, mit

$$C = \left| \frac{P - P_{ref}}{P + P_{ref}} \right|$$

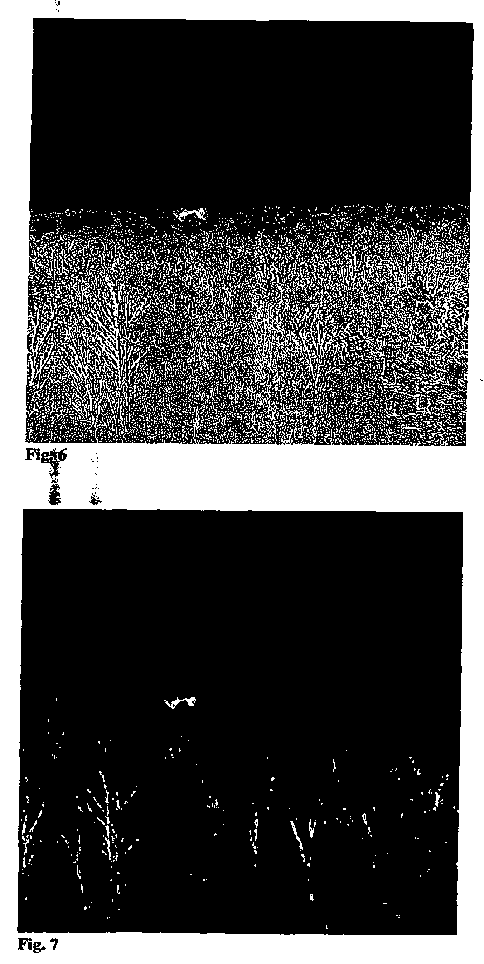

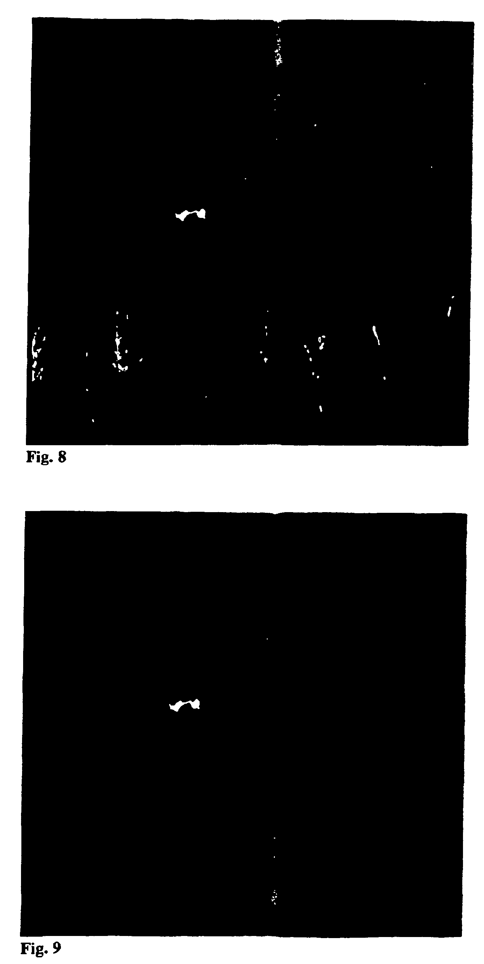

und $0 \leq C \leq 1$, wobei P das aktuelle und $P_{ref}$ das Referenzbild bezeichnet. Das entstandene Kontrast-Differenzbild ist in Fig.6 dargestellt. Anschließend wird das normierte Kontrast-Bild gemäß Fig.6 einer Bandpaßfilterung unterzogen, um Änderungen mit nicht relevanten räumlichen Frequenzen zu unterdrücken, insbesondere von großräumigen Veränderungen, beispielsweise aufgrund von veränderten Beleuchtungsverhältnissen, was in Fig. 7 dargestellt ist. Danach erfolgt eine adaptive Berechnung eines Schwellwertes $C_{min}$ als Funktion der Standardabweichung im Kontrast-Differenzbild gemäß Fig.6. Da normalerweise die Streuung im Himmel verschieden zu der Streuung unterhalb des Horizonts ist, kann entsprechend der Schwellwert $C_{min}$ für die Bereiche oberhalb des Horizonts kleiner gewählt werden, so daß die Erkennungssicherheit für Rauchwolken in großen Entfernungen weiter erhöht wird. Mittels des ermittelten Schwellwertes $C_{min}$ wird das Bild gemäß Fig.7 binarisiert, was in Fig.8 dargestellt ist. Mittels des zuvor schon erwähnten Clustersuchalgorithmus werden vorhandene Cluster aufgefunden. Nachfolgend werden Falschdetektionen durch Bildung des Korrelationskoeffizienten für jedes Cluster bei den entsprechenden Koordinaten der zugehörigen normierten Originalbilder eliminiert. Da die Rauchentwicklung unkorreliert erfolgt, können Falschdetektionen durch Korrelationskoeffizienten $K > K_{max}$ identifiziert werden. Weiterhin können Cluster unterhalb einer bestimmten Mindestgröße eliminiert werden, wobei die Mindestgröße in Abhängigkeit von der geschätzten Entfernung variabel gewählt werden kann, wobei sich die Entfernung aus der Kamerahöhe sowie der Y-Koordinate des Punktes im Bild bestimmen läßt. Die verbleibenden Cluster stellen dann mit großer Wahrscheinlichkeit eine Rauchwolke dar, wobei das Ergebnis dieser Eliminierung von Falschdetektionen in Fig.9 dargestellt ist. Zur Erhöhung der Sicherheit, insbesondere zur Unterdrückung von Falschalarmen, die durch ein bewegtes Objekt im Blickfeld verursacht werden, kann die Aufnahme und Auswertung eines weiteren Bildes dienen. Ein bewegtes Objekt ist dann im zweiten Kontrast-Differenzbild an einer veränderten Ortskoordinate zu erkennen, wohingegen eine Rauchwolke im wesentlichen ortsfest bleibt.

In einem weiteren alternativen Verfahren wird eine Rauchwolke primär mittels Strukturmerkmalen erkannt, wozu zunächst einige Vorüberlegungen dargelegt werden. Prinzipiell sind sowohl eine Rauchwolke als auch der Wald verhältnismäßig gleichförmig strukturiert. Allerdings unterscheiden diese sich durch einige physikalische Merkmale. So ist der Rauch typischerweise als Fahne ausgebildet, der nach oben steigt. Freiflächen im Wald werden durch ihre gleichmäßige Struktur und geschnittene Linien an der Oberkante von Rauchwolken unterschieden. Der Rauch ist unmittelbar über dem Horizont besonders deutlich durch eine Änderung der Struktur und Intensität erkennbar, da hier der Hintergrund relativ gleichmäßig strukturiert ist. Zur Erkennung des Horizonts kann einerseits wieder die partielle Ableitung in Y-Richtung gebildet werden, oder aber der Horizont wird mittels der Stochastik aus den Grauwerten des Bildes bestimmt. Die Strukturen des Himmels in unmittelbarer Nähe des Horizonts sind sehr gleichförmig und unterscheiden sich insbesondere von der Strukturierung des Waldes. Diese Strukturen sind viel gröber und lassen sich mit dieser Eigenschaft trennen. Zum Auffinden der Strukturunterschiede wird das Bild verschoben und mit dem Ursprungsbild verglichen. Mit einer gewählten Schwelle kann in senkrechter Richtung ein Sprung der Grauwerte an der Horizontallinie detektiert werden.

Innerhalb von Gebieten von der erwarteten minimalen Ausdehnung von Feuern werden Differenzen von Grauwerten mit den dazugehörigen Nachbarpunkten gebildet. Die Abstände der Nachbarpunkte sind dabei vorzugsweise etwa vom doppelten Durchmesser der zu erwartenden kleinsten Rauchausdehnung. Weiter lassen sich Rauchwolken am Horizont durch eine Berücksichtigung der Vorzugsrichtung der Strukturen voneinander unterscheiden. Während Rauchwolken auch bei Wind eine senkrechte Vorzugsrichtung der stochastischen Strukturen aufweisen, sind die Strukturverteilungen der natürlichen Wolken in unmittelbarer Nähe des Horizonts vorzugsweise waagerecht ausgerichtet, oder aber diese sind diffus und haben wesentlich kleinere Strukturen. Des weiteren werden die jeweiligen Grauwerte der Nachbarpunkte von einem als Referenzpunkt angenommen Punkt bitweise oder bereichsweise nach aufsteigenden Grauwerten geordnet. Daraus ergibt sich eine Verteilung, die das Feuer als einmaliges charakteristisches Ereignis erscheinen läßt.

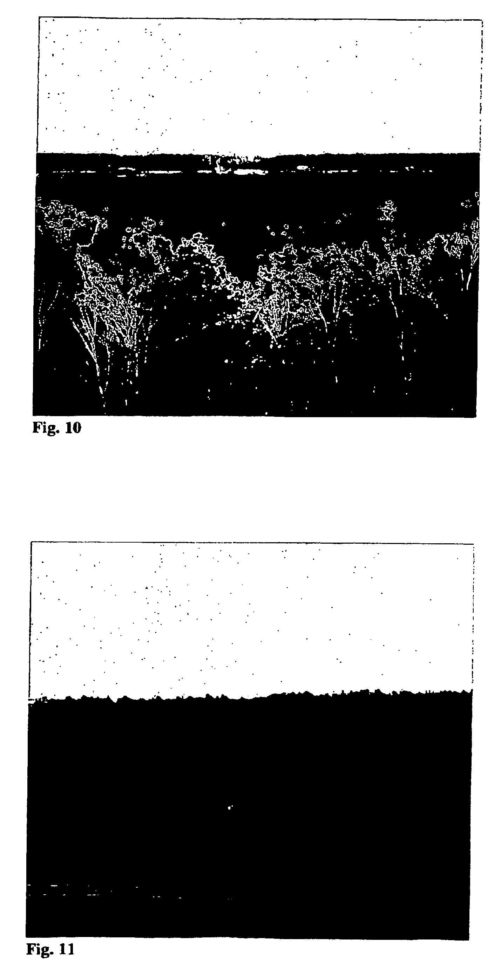

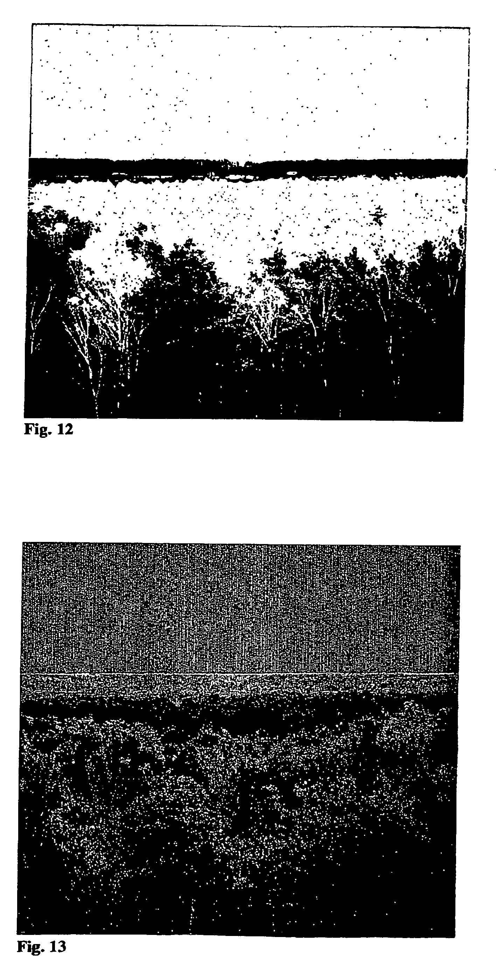

Das Verfahren wird nun wieder an dem Referenzbild gemäß Fig.1 und dem aktuellen Bild gemäß Fig. 3 erläutert. Vorab wird die Helligkeit des aktuellen Bildes über eine Bestimmung der Summe der Grauwerte und Vergleich mit dem Referenzbild normiert. Anschließend wird der Horizont wie zuvor beschrieben ermittelt und das Bild in Regionen ober- und unterhalb des Horizonts unterteilt. Auf Basis von strukturellen Unterschieden werden auch Waldregionen in der Nähe des Horizonts, in der Mitte und im Vordergrund unterschieden. Zur Bestimmung des unmittelbaren Vordergrundes wird beispielsweise die sprunghafte Vergröberung der Struktur ausgenutzt. Diese Unterscheidung wirkt sich auf die erwartete Größe des Rauches aus, nämlich kleinere Rauchsäulen im Hintergrund als im Vordergrund. In dem Referenzbild werden zur Bestimmung der Besonderheiten im Bild nach Strukturmerkmalen und Grauwerteigenschaften gewisse Flächen wie beispielsweise Gebäude, Wiesen, Felder, Seen und Straßen, die nicht für Feuer in Betracht kommen, markiert. In der Fig.10 ist dabei die Markierung vom Himmel und Gebäuden und in Fig.11 die Markierung des vorderen Waldabschnitts dargestellt. Die Hervorhebung des Waldes am Horizont und der vorgelagerten Wiesen ist in Fig.12 dargestellt.

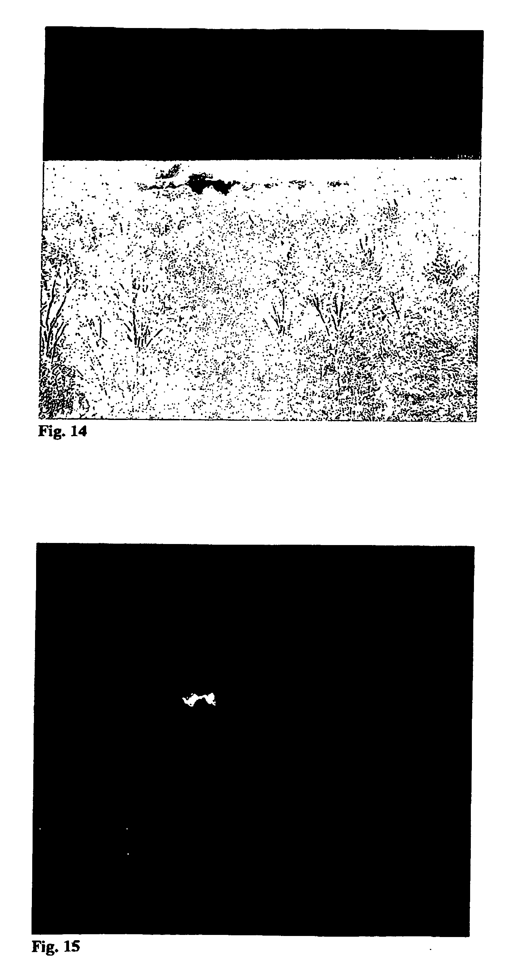

Zur Auffindung der Strukturmerkmale werden nichtlineare Operationen mit den benachbarten Punkten ausgeführt, wie beispielsweise nichtlineare Filterungen, Ordnung nach aufsteigenden Grauwerten, Ordnung nach Rang, lokale Histogramme, Clusterbildungen auf Basis von nichtlinearen Kriterien bezüglich des örtlichen Abstandes gekoppelt mit den Grauwertabständen. Es werden hier sowohl parametrische Verfahren (Bestimmung von Wahrscheinlichkeitsgrößen) wie auch nichtparametrische Verfahren wie Rangalgorithmen benutzt. In der Fig.13 sind die Strukturunterschiede des Rauches an der dunklen Linie unter dem Horizont erkennbar. Werden nun die bereits als nicht relevant in Frage kommenden Flächen maskiert, ergibt sich eine Darstellung gemäß Fig.14, wo der Rauch sich schon sehr deutlich von der Umgebung abhebt.

Die lokalen Helligkeitsänderungen beispielsweise aufgrund unterschiedlicher Sonneneinstrahlung bei bewölktem Himmel, können über die Form der Grauwertverteilung im Vergleich mit einem Referenzbild und der sich bei verschiedener Sonneneinstrahlung ergebenden Verschiebung der Verteilung weitgehend ausgeglichen werden.

Die Strukturänderungen werden in Form von digitalen Bildern dargestellt. Durch algebraische und/ oder logische Verknüpfungen werden verschiedene Strukturmerkmale zur Identifikation von Rauch zusammengefaßt. Das so zusammengefaßte Strukturbild mit optimierten Empfindlichkeiten gegenüber Rauch wird über Schwellen als Binärbild dargestellt, in dem der Rauch in Fig. 15 als weiße Fläche erscheint.

Die zuvor beschriebenen Verfahren sind jeweils für sich bereits in der Lage, Rauch zu detektieren. Eine Steigerung der Zuverlässigkeit wird durch die parallele Anwendung der Verfahren erreicht. Dies wird insbesondere dadurch erleichtert, daß einzelne Verfahrensschritte für alle Verfahren gleich sind bzw. gleiche Verfahrensschritte verwendet werden können. Beispielsweise kann die Horizontbestimmung mittels Strukturmerkmalen auch den anderen Verfahren zur Verfügung gestellt werden. Ebenso kann ein gemeinsames Bildmatching vom aktuellen Bild zum Referenzbild durchgeführt werden. Auch kann ein gemeinsamer Clustersuchalgorithmus Anwendung finden.

**Patentansprüche**

1. Verfahren zur automatischen Waldbranderkennung mittels einer auf einer Plattform drehbar angeordneten optischen Aufnahmeeinrichtung, einer elektronischen Auswerteeinheit und einem Sender oder lokalen Alarmgeber, umfassend folgende Verfahrensschritte:

    a) Aufnehmen eines Referenzbildes einer Szene und Bestimmung des Horizonts
    b) Normieren des aufgenommenen Referenzbildes auf Mittelwert und Standardabweichung und markieren des Bildbereiches unter dem Horizont,
    c) Durchführen einer nichtlinearen Filterung zur Unterdrückung möglicher Bewegungen im normierten aufgenommenen Referenzbild,
    d) Zwischenspeichern des gewonnenen Referenzbildes,

e) Aufnehmen mindestens eines aktuellen Bildes der zu untersuchenden Szene,

f) Vornehmen eines Bildmatching des aktuellen Bildes auf das Referenzbild,

g) Normieren des gematchten aufgenommenen Bildes analog Verfahrensschritt b),

h) Bilden von Schwellen proportional zur normierten Standardabweichung,

i) Vergleichen des aktuellen Bildes gemäß Verfahrensschritt g) mit dem entsprechenden Referenzbild gemäß Verfahrenschnitt d) und erzeugen eines binarisierten Differenzbildes unter Zuhilfenahme der Schwellen gemäß Verfahrensschritt h),

j) Anwenden eines Clustersuchalgorithmus auf das binarisierte Differenzbild gemäß Verfahrensschritt i) zum Auffinden zusammenhängender cluster.

k) Bilden von Wahrscheinlichkeiten zur Bewertung der gefundenen Cluster aufgrund charakteristischer Merkmale und eliminieren von Clustern unterhalb einer Wahrscheinlichkeitsschwelle und

l) Auslösen eines Alarms, falls die Rauchwahrscheinlichkeit für mindestens ein Cluster eine vorgegebene Schwelle überschreitet.

2. Verfahren nach Anspruch 1, **dadurch gekennzeichnet, dass** mittels Texturoperatoren mehrere Merkmals-Bilder des Referenzbildes gemäß Verfahrensschritt b) und g) gebildet werden, deren Differenzbilder analog des radiometrischen Differenzbildes gemäß Anspruch 1 ausgewertet werden.

3. Verfahren nach Anspruch 2, **dadurch gekennzeichnet, dass** die Merkmals-Referenzbilder vor der Differenzbildung einer Filterung zur Unterdrückung von Störgrößen unterzogen werden.

4. Verfahren zur automatischen Waldbranderkennung mittels einer auf einer Plattform drehbar angeordneten optischen Aufnahmeeinrichtung, einer elektronischen Auswerteeinheit und einem Sender oder lokalen Alarmgeber, umfassend folgende Verfahrensschritte:

a) Aufnehmen eines Referenzbildes einer Szene,

b) Normieren des Referenzbildes auf Standardwerte,

c) Aufnehmen eines aktuellen Bildes der Szene,

d) Vornehmen eines Bildmatching des aktuellen Bildes auf das Referenzbild,

e) Normieren des gematchten Bildes gemäß Verfahrensschritt d) analog Verfahrensschritt b),

f) Berechnen eines normierten Kontrast-Differenzbildes C aus dem normierten gematchten Bild P und dem normierten Referenzbild P_ref,

mit $C = \left| \dfrac{P - P_{ref}}{P + P_{ref}} \right|$ ,

g) Durchführen einer Bandpassfilterung des normierten Kontrast Differenzbildes, h) adaptive Berechnung eines Schwellwertes als Funktion der Streuung im normierten Kontrast Differenzbild,

i) Binarisieren des gefilterten normierten Kontrast Differenzbildes durch Vergleich mit dem Schwellwert,

j) Anwenden eines Clustersuchalgorithmus auf das binarisierte Kontrast Differenzbild gemäß Verfahrensschritt i),

k) Berechnen eines Korrelationskoeffizienten für jedes Cluster bei den entsprechenden Koordinaten der zugehörigen Originalbilder gemäß Verfahrensschritt b) und e),

l) Bilden von Wahrscheinlichkeiten zur Bewertung der gefundenen Cluster aufgrund charakteristischer Merkmale wie Korrelationskoeffizient und Kontrast sowie eliminieren von Clustern unterhalb einer Wahrscheinlichkeitsschwelle und

m) Auslösen eines Alarms, falls die Rauchwahrscheinlichkeit für mindestens ein Cluster eine vorgegebene Schwelle überschreitet.

5. Verfahren nach Anspruch 4, **dadurch gekennzeichnet, dass** eine Horizontbestimmung durchgeführt wird, wobei die Schwellwerte oberhalb des Horizonts und unterhalb des Horizonts verschieden gewählt werden.

6. Verfahren zur automatischen Waldbranderkennung nach Anspruch 1 und 2, umfassend folgende parallel dazu angewandte Verfahrensschritte:

a) Aufnehmen und normieren eines aktuellen Bildes,

b) Bestimmen des Horizonts aufgrund von Strukturmerkmalen,

c) Aufteilen des Bildes in Regionen über- und unterhalb des Horizonts,

d) Bestimmen des unmittelbaren Vordergrundes aufgrund von Strukturmerkmalen und Ableiten einer erwarteten Mindestausdehnung für den Rauch,

e) Auffinden von für Rauch charakteristischen Strukturmerkmalen durch nichtlineare Operationen auf Bildbestandteile in den verschiedenen Bereichen gemäß c) und d),

f) Verknüpfen der gefundenen Struktur merkmale mittels algebraischer und/oder logischer Operatoren zu einem zusammengefassten Strukturbild,

g) Binarisieren des zusammengefassten Strukturbildes durch Vergleich mit einer Schwelle,

h) Anwenden eines Clustersuchalgorithmus auf das binarisierte Bild gemäß Verfahrensschritt g),

j) Bilden von Wahrscheinlichkeiten zur Bewertung der gefundenen Cluster aufgrund charakteristischer Merkmale und eliminieren von Clustern unterhalb einer Wahrscheinlichkeitsschwelle, und

k) Auslösen eines Alarms, falls die Rauchwahrscheinlichkeit für mindestens ein Cluster eine vorgegebene Schwelle überschreitet.

7. Verfahren nach Anspruch 6, **dadurch gekennzeichnet, dass** vorab ein Referenzbild aufgenommen und normiert wird, das zum Auffinden und Maskieren von nicht relevanten Flächen innerhalb des aktuellen Bildes durch Vergleich von Grauwerten und Strukturmerkmalen dient.

8. Vorrichtung zur Durchführung des Verfahrens nach Anspruch 1 und/oder 4, umfassend eine CCD-Matrix- oder APS-Kamera als die optische Aufnahmeeinrichtung, die um 360° horizontal verstellbar gelagert und mit der elektronischen Auswerteeinheit verbunden ist, wobei der elektronischen Auswerteeinheit der lokaler Alarmgeber und/oder der Sender zur Kommunikation mit einer Zentrale zugeordnet ist.

9. Vorrichtung nach Anspruch 8, **dadurch gekennzeichnet, dass** vor der Kameraoptik ein schmalbandiger Rot- und/oder IR-Durchlassfilter angeordnet ist.

**Claims**

1. Method for automatic forest fire recognition by means of an optical photographic device which is disposed rotatably on a platform, an electronic evaluation unit and a transmitter or local alarm, comprising the following method steps:

   a) taking a reference picture of a scene and determining the horizon,

   b) standardising the reference picture which has been taken to an average value and standard deviation and marking the picture region below the horizon,

   c) implementing a non-linear filtering in order to suppress possible movements in the standardised reference picture which has been taken,

   d) intermediately storing the obtained reference picture,

   e) taking at least one current picture of the scene to be investigated,

f) undertaking picture matching of the current picture to the reference picture,

g) standardising the matched picture which has been taken analogously to method step b),

h) forming thresholds proportional to the standardised standard deviation,

i) comparing the current picture according to method step g) to the corresponding reference picture according to method step d) and producing a binarised difference picture with the assistance of the thresholds according to method step h),

j) applying a cluster search algorithm to the binarised difference picture according to method step i) in order to discover correlating clusters,

k) forming probabilities in order to assess the discovered clusters on the basis of characteristic features and eliminating clusters below a probability threshold, and

l) triggering an alarm in the case where the smoke probability for at least one cluster exceeds a prescribed threshold.

2. Method according to claim 1, **characterised in that**, by means of texture operators, a plurality of feature pictures of the reference picture is formed according to method step b) and g), the difference pictures of which are evaluated analogously to the radiometric difference picture according to claim 1.

3. Method according to claim 2, **characterised in that** the feature reference pictures are subjected to filtering before difference forming in order to suppress interference values.

4. Method for automatic forest fire recognition by means of an optical photographic device which is disposed rotatably on a platform, an electronic evaluation unit and a transmitter or local alarm, comprising the following method steps:

   a) taking a reference picture of a scene,

   b) standardising the reference picture to standard values,

   c) taking a current picture of the scene,

   d) undertaking picture matching of the current picture to the reference picture,

   e) standardising the matched picture according to method step d) analogously to method step b),

   f) calculating a standardised contrast-difference picture from the standardised, matched picture $P$ and the standardised reference picture $P_{ref}$, with

$$C = \left| \frac{P - P_{ref}}{P + P_{ref}} \right|$$

g) implementing a band pass filtering of the standardised contrast-difference picture,

h) adaptive calculation of a threshold value as function of the scatter in the standardised contrast-difference picture,

i) binarising the filtered, standardised contrast-difference picture by comparison with the threshold value,

j) applying a cluster search algorithm to the binarised contrast-difference picture according to method step i),

k) calculating a correlation coefficient for each cluster in the case of corresponding coordinates of the associated original pictures according to method step b) and e),

1) forming probabilities in order to assess the discovered clusters on the basis of characteristic features such as correlation coefficient and contrast and also eliminating clusters below a probability threshold, and

m) triggering an alarm in the case where the smoke probability for at least one cluster exceeds a prescribed threshold.

5. Method according to claim 4, **characterised in that** a horizon determination is implemented, the threshold values being chosen to be different above the horizon and below the horizon.

6. Method for automatic forest fire recognition according to claim 1 and 2, comprising the following method steps applied in parallel thereto:

   a) taking and standardising a current picture,

   b) determining the horizon on the basis of structural features,

   c) dividing the picture into regions above and below the horizon,

   d) determining the immediate foreground on the basis of structural features and deriving an anticipated minimum spread of the smoke,

   e) discovering structural features which are characteristic of smoke by means of non-linear operations on picture components in the various regions according to c) and d),

   f) linking the discovered structural features by means of algebraic and/or logic operators into an assembled structural picture,

   g) binarising the assembled structural picture by comparing with a threshold,

   h) applying a cluster search algorithm to the binarised picture according to method step g),

j) forming probabilities in order to assess the discovered clusters on the basis of characteristic features and eliminating clusters below a probability threshold, and

k) triggering an alarm in the case where the smoke probability for at least one cluster exceeds a prescribed threshold.

7. Method according to claim 6, **characterised in that** a reference picture is taken in advance and standardised, which picture serves for discovering and masking non-relevant areas within the current picture by comparing gray scale values and structural features.

8. Device for implementing the method according to claim 1 and/or 4, comprising a CCD matrix or APS camera as the optical photographic device, which is mounted horizontally displaceably by 360° and is connected to the electronic evaluation unit, the local alarm and/or the transmitter being associated with the electronic evaluation unit in order to communicate with a central office.

9. Device according to claim 8, **characterised in that** a narrow-band red- or IR-band pass filter is disposed in front of the camera lens.

## Revendications

1. Procédé de reconnaissance automatique de feux de forêts au moyen d'un dispositif de prise de vue optique disposé de manière orientable sur une plate-forme, d'une unité d'analyse électronique et d'un émetteur ou d'un avertisseur local, comportant les étapes de procédé suivantes :

   a) Prise d'une image de référence d'une scène et détermination de l'horizon

   b) Normalisation de l'image de référence prise sur valeur moyenne et écart type et marquage du domaine de l'image sous l'horizon,

   c) Réalisation d'une filtration non linéaire pour la suppression des déplacements possibles dans une image de référence prise normalisée.

   d) Stockage temporaire de l'image de référence acquise

   e) Prise d'au moins une image actuelle de la scène à analyser,

   f) Réalisation d'une comparaison de l'image actuelle à l'image de référence

   g) Normalisation de l'image prise comparée analogiquement à l'étape de procédé b)

   h) Formation de seuils proportionnellement à l'écart type normalisé,

   i) Comparaison de l'image actuelle selon l'étape de procédé g) avec l'image de référence correspondante et selon l'étape de procédé d) et production d'une image de différence binarisée au moyen des seuils selon l'étape de procédé h),

j) Application d'un algorithme de recherche de clusters sur l'image de différence binarisée selon l'étape de procédé i) pour découvrir des clusters liés à des clusters.

k) Formation de probabilités pour l'évaluation des clusters trouvés sur la base de variables caractéristiques et élimination de clusters en dessous d'un seuil de probabilité et

l) Déclenchement d'une alarme, au cas où la probabilité de fumée pour au moins un cluster dépasse un seuil donné.

2. Procédé selon la revendication 1, **caractérisé en ce qu'**au moyen d'opérateurs de texture plusieurs images à variables de l'image de référence soient formées selon les étapes de procédé b) et g), dont les images de différences sont analysées analogiquement à l'image de référence radiométrique selon la revendication 1.

3. Procédé selon la revendication 2 **caractérisé en ce que** les images de références à variables, avant la soustraction d'une filtration sont soumises à la suppression de perturbations.

4. Procédé de reconnaissance automatique de feux de forêts au moyen d'un dispositif de prise de vue optique disposé de manière orientable sur une plateforme, d'une unité d'analyse électronique et d'un émetteur ou d'un avertisseur local, comportant les étapes de procédé suivantes :

   a) Prise d'une image de référence d'une scène,
   b) Normalisation de l'image de référence sur des valeurs standard,
   c) Prise d'une image actuelle de la scène,
   d) Réalisation d'une comparaison de l'image actuelle à l'image de référence
   e) Normalisation de l'image comparée selon l'étape de procédé d), analogiquement à l'étape de procédé b),
   f) Calcul d'une image de différence à contraste normalisée C à partir de l'image normalisée comparée P et de l'image de référence normalisée $P_{ref}$, avec $C = \left| \dfrac{P - Pref}{P + Pref} \right|$

   g) Réalisation d'une filtration passe-bande d'une image de différence à contraste normalisée,
   h) Calcul adaptatif d'une valeur seuil comme fonction de dispersion dans une image de différence à contraste normalisée,
   i) Binarisation de l'image de différence à contraste normalisée filtrée par comparaison avec la valeur seuil

j) Application d'un algorithme de recherche de clusters sur l'image de différence à contraste binarisée selon l'étape de procédé i).

k) Calcul d'un coefficient de corrélation pour chaque cluster avec les coordonnées correspondantes des images originales associées selon les étapes de procédé b) et e),

l) Formation de probabilités pour l'évaluation des clusters trouvés sur la base de variables caractéristiques comme le coefficient de corrélation et le contraste et élimination de clusters en dessous d'un seuil de probabilité et

m) Déclenchement d'une alarme, au cas où la probabilité de fumée pour au moins un cluster dépasse un seuil donné.

5. Procédé selon la revendication 4, **caractérisé en ce qu'**une détermination d'horizon est réalisée, sachant que les valeurs seuils sont choisies différemment au-dessus de l'horizon et en dessous de l'horizon.

6. Procédé de reconnaissance automatique de feux de forêts selon les revendications 1 et 2, comprenant les étapes de procédés suivantes appliquées en parallèle :

   a) Prise et normalisation de l'image actuelle,
   b) Détermination de l'horizon sur la base de variables de structure,
   c) Répartition de l'image dans des régions au-dessus et au-dessous de l'horizon,
   d) Détermination du premier plan direct en fonction sur la base de variables de structure et dérivation d'une expansion minimale prévue pour la fumée,
   e) Détection de variables de structure caractéristiques pour la fumée par des opérations non linéaires sur des composants d'images dans les différents domaines selon c) et d),
   f) Couplage des variables de structure caractéristiques trouvées au moyen d'opérateurs algébriques et/ou logiques à une image de structure regroupée,
   g) Binarisation de l'image de structure regroupée par comparaison avec un seuil
   h) Application d'un algorithme de recherche de clusters à l'image binarisée selon l'étape de procédé g).
   j) Formation de probabilités pour l'évaluation des clusters trouvés sur la base de variables caractéristiques et élimination de clusters en dessous d'un seuil de probabilité et
   k) Déclenchement d'une alarme, au cas où la probabilité de fumée dépasse un seuil donné pour au moins un cluster.

**7.** Procédé selon la revendication 6, **caractérisé en ce qu'**en premier lieu une image de référence est prise et normalisée, laquelle image sert à détecter et à masquer des surfaces non concernées à l'intérieur de l'image actuelle par comparaison de valeurs de gris et de variables de structure.

**8.** Dispositif pour la réalisation d'un procédé selon la revendication 1 et/ou 4, comprenant une matrice CCD ou une caméra APS comme appareil de prise de vues optique, qui peut être logé de manière réglable horizontalement à 360° et qui est relié à l'unité d'analyse électronique sachant que l'avertisseur local et/ou l'émetteur est ajouté à l'unité d'analyse électronique pour communiquer avec une centrale.

**9.** Dispositif selon la revendication 8, **caractérisé en ce qu'**un limiteur de bande passante à bande étroite, rouge ou à infra-rouges, est disposé devant l'optique de la caméra.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

**Fig. 14**

**Fig. 15**